# FASCICULE DE BREVET EUROPEEN

(11) **EP 1 478 829 B1**
(45) Date de publication et mention de la délivrance du brevet: **30.11.2005**
(21) Numéro de dépôt: 03706625.5
(22) Date de dépôt: 17.02.2003
(51) Int. Cl.: F01N 1/16, F01N 3/08, F02B 27/06, F01N 3/28, F01N 7/02

(54) **LIGNE D'ECHAPPEMENT ET VEHICULE A MOTEUR AINSI EQUIPE**
ABGASSTRANG EINER BRENNKRAFTMASCHINE UND KRAFTFAHRZEUG AUFWEISEND EIN SOLCHER ABGASSTRANG
EXHAUST LINE AND MOTOR VEHICLE EQUIPPED THEREWITH

(30) Priorité: 25.02.2002 FR 0202351
(43) Date de publication de la demande: 24.11.2004
(73) Titulaire: Renault Trucks, 69800 St Priest (FR); Renault s.a.s., 92100 Boulogne Billancourt (FR)
(72) Inventeur: VIGNASSA, Philippe, F-38200 VIENNE (FR); LE BRAZIDEC, Franck, F-91430 IGNY (FR)
(74) Mandataire: Vuillermoz, Bruno
(86) Numéro de dépôt international: PCT/EP2003/050019
(87) Numéro de publication internationale: WO 2003/071104

(56) Documents cités:
- EP-A- 0 816 648
- WO-A-00/74823
- WO-A-94/01659
- DE-A- 3 013 444
- DE-A- 4 439 705
- PATENT ABSTRACTS OF JAPAN vol. 2000, no. 12, 3 janvier 2001 (2001-01-03) & JP 2000 257418 A (SANGO CO LTD;TOYOTA MOTOR CORP), 19 septembre 2000 (2000-09-19)

## Description

La présente invention concerne une ligne d'échappement, ainsi qu'un moteur à combustion interne équipé d'une telle ligne d'échappement. Elle vise également un véhicule intégrant un tel moteur.

L'évolution des normes de dépollution et d'émission sonore des véhicules routiers tend à devenir de plus en plus sévère. En particulier, dans le domaine des véhicules industriels, les futures réglementations de dépollution imposeront des systèmes de traitement de plus en plus contraignants et volumineux.

Tout d'abord, ces nouveaux systèmes de traitement représentent des volumes non négligeables qui viennent s'ajouter aux volumes des silencieux déjà existants. Ces nouveaux systèmes de traitement devront être intégrés et pris en compte pour l'architecture du châssis et du véhicule.

Ensuite, l'addition de nouveaux systèmes de traitement sur la ligne d'échappement va induire des pertes de charge supplémentaires qui peuvent avoir un impact important et défavorable sur les performances du moteur en termes de puissance et donc de consommation de carburant.

### Etat de la technique

On connaît d'après les documents EP- 0.341.832 et WO- 00/ 34.632 des systèmes d'élimination des particules solides rejetées par le moteur à combustion.

On connaît encore, d'après le document WO- 00/ 74.823, des systèmes de réduction des gaz oxydes d'azote NOₓ.

On connaît, d'après le document FR- 2.613.089, un système actif de réduction du bruit du type à dispositif de restriction variable, le dispositif étant régulé en fonction des pulsations du débit instantané des gaz d'échappement sortant du moteur à combustion interne.

Cependant, l'ensemble des systèmes permettant de réaliser les fonctions réduction d'intensité sonore et traitement anti-pollution sont conçus en tant que systèmes séparés. Ces systèmes sont choisis et testés séparément et de manière isolée et ne sont donc jamais associés entre-eux.

On connaît, d'après le document WO- 94/ 01.659, une ligne d'échappement comprenant, successivement à partir du moteur, un système de dépollution par catalyse suivi par un système actif de réduction du bruit du type à dispositif de restriction variable.

On connaît, d'après le document DE- 44.39.705, une ligne d'échappement comprenant, successivement à partir du moteur, un système de dépollution par catalyse suivi par un système actif de réduction du bruit du type à dispositif de restriction variable et se terminant par un silencieux passif.

Cependant, ces lignes ne résolvent pas de manière complète et ensemble les problèmes de pollution par les gaz d'échappement émis, notamment d'élimination des particules solides, et les problèmes de réduction d'émissions sonores. De plus, ces lignes ne sont pas optimisées du point de vue encombrement, poids et contre-pression induisant des pertes de charge.

### Résumé de l'invention

Un premier but de l'invention est de concevoir une ligne d'échappement qui soit particulièrement efficace simultanément en terme de réduction d'émissions sonores et de dépollutions des gaz rejetés issus de la combustion. Un deuxième but de l'invention est de mettre au point une ligne d'échappement dont le volume global est inférieur à la somme des volumes des différents systèmes constitutifs. Un troisième but de l'invention est de prévoir une ligne d'échappement à différents systèmes de dépollution et de réduction d'intensité sonore optimisée de manière à minimiser les pertes de charge. Un quatrième but de l'invention est de monter pour un moteur à combustion interne et un véhicule une ligne d'échappement qui soit particulièrement efficace en terme de réduction des émissions sonores et polluantes et des performances moteur.

Une ligne d'échappement, pour moteur à combustion interne, comprend un système actif de réduction du bruit, du type à dispositif de restriction variable, régulé en continu en fonction des pulsations du débit instantané des gaz d'échappement sortant du moteur à combustion interne, et un premier système de dépollution, placé en amont dudit système actif de réduction du bruit.

Conformément à un premier aspect de l'invention, la ligne d'échappement est caractérisée en ce que le système actif de réduction du bruit présente une chambre de détente pour les phases de fermeture du dispositif de restriction variable, placée en amont du système actif de réduction du bruit, et intégrée dans le premier système de dépollution, et une cavité dissipative des moyennes et hautes fréquences placée en aval dudit système actif de réduction du bruit.

L'invention réussit à combiner simultanément un système de réduction du bruit et un système de dépollution. Le principe de l'invention est de réussir à réduire le volume global de la ligne en incorporant au moins un volume utile nécessaire au fonctionnement optimal d'un point de vue acoustique du dispositif de restriction. Ceci est réalisé à l'intérieur d'un système chargé de la dépollution des gaz d'échappement. Autrement dit, une partie des volumes des systèmes chargés de la dépollution des gaz d'échappement est utilisée en tant que volume pour l'optimisation du fonctionnement du système actif de réduction du bruit. La chambre de détente ou la cavité dissipative sont ainsi intégrées dans un système chargé de la dépollution des gaz d'échappement placé en amont ou en aval par rapport au système actif de réduction du bruit du type à dispositif de restriction variable.

Cette solution d'échappement provoque une synergie entre système de dépollution et système de réduction du bruit. Le nombre de volumes présents est réduit et l'architecture de ligne est optimisée à la fois en réduisant poids et encombrement. En outre, les performances du moteur sont optimisées en diminuant la contre-pression moteur par rapport à une ligne d'échappement aux systèmes et volumes simplement juxtaposés.

Dans une première forme de réalisation, le premier système de dépollution placé en amont peut être un système d'élimination des particules solides. De manière particulièrement avantageuse, la chambre de détente pour les phases de fermeture du dispositif de restriction variable du système actif de réduction du bruit peut être intégrée dans le système d'élimination des particules solides, entre un catalyseur et un filtre à particules.

Pour une dépollution optimale des gaz rejetés, la ligne d'échappement peut comprendre en outre un deuxième système de dépollution placé en aval du système actif de réduction du bruit. Dans ce cas, la cavité dissipative des moyennes et hautes fréquences peut être intégrée dans le deuxième système de dépollution placé en aval.

Lorsque le premier système de dépollution placé en amont est un système d'élimination des particules solides, le deuxième système de dépollution placé en aval peut alors être un système de réduction des gaz oxydes d'azote NOₓ. La cavité dissipative des moyennes et hautes fréquences peut être favorablement intégrée dans le système de réduction des gaz oxydes d'azote NOₓ, après un catalyseur couramment dénommé DéNOₓ.

Dans une deuxième forme de réalisation préférée, le premier système de dépollution placé en amont peut être un système de réduction des gaz oxydes d'azote NOₓ. Pour une dépollution optimale des gaz rejetés, la ligne d'échappement peut comprendre en outre un deuxième système de dépollution placé en amont du premier système de dépollution.

Lorsque le premier système de dépollution placé en amont est un système de réduction des gaz oxydes d'azote NOₓ, le deuxième système de dépollution associé peut être alors un système d'élimination des particules solides.

Dans la première et dans la deuxième forme de réalisation et pour une dépollution optimale, le système de réduction des gaz oxydes d'azote NOₓ peut être du type à injection d'urée suivi par un catalyseur couramment dénommé DéNOₓ.

Conformément à un deuxième aspect de l'invention, un moteur à combustion interne est caractérisé en ce qu'il est connecté à au moins une ligne d'échappement telle que décrite ci-dessus.

Conformément à un troisième aspect de l'invention, un véhicule à moteur est caractérisé en ce qu'il comprend au moins une ligne d'échappement telle que décrite ci-dessus.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente un schéma simplifié d'une première forme de réalisation de la ligne d'échappement selon l'invention ;
- la Figure 2 représente un schéma simplifié du système d'élimination des particules ;
- la Figure 3 représente un schéma simplifié du système actif de réduction du bruit ;
- la Figure 4 représente un schéma simplifié du système de réduction des gaz oxydes d'azote NOₓ ; et
- la Figure 5 représente une vue en perspective d'une deuxième forme de réalisation de la ligne d'échappement selon l'invention.

### Description détaillée

Un véhicule à moteur (non représenté) comprend un moteur thermique à combustion interne (1), par exemple de type turbo-diesel, générateur d'émissions sonores et de gaz polluants. Les pulsations de débits des gaz polluants sont recueillies par les différents collecteurs d'échappement (2) et acheminées par la ligne d'échappement (3).

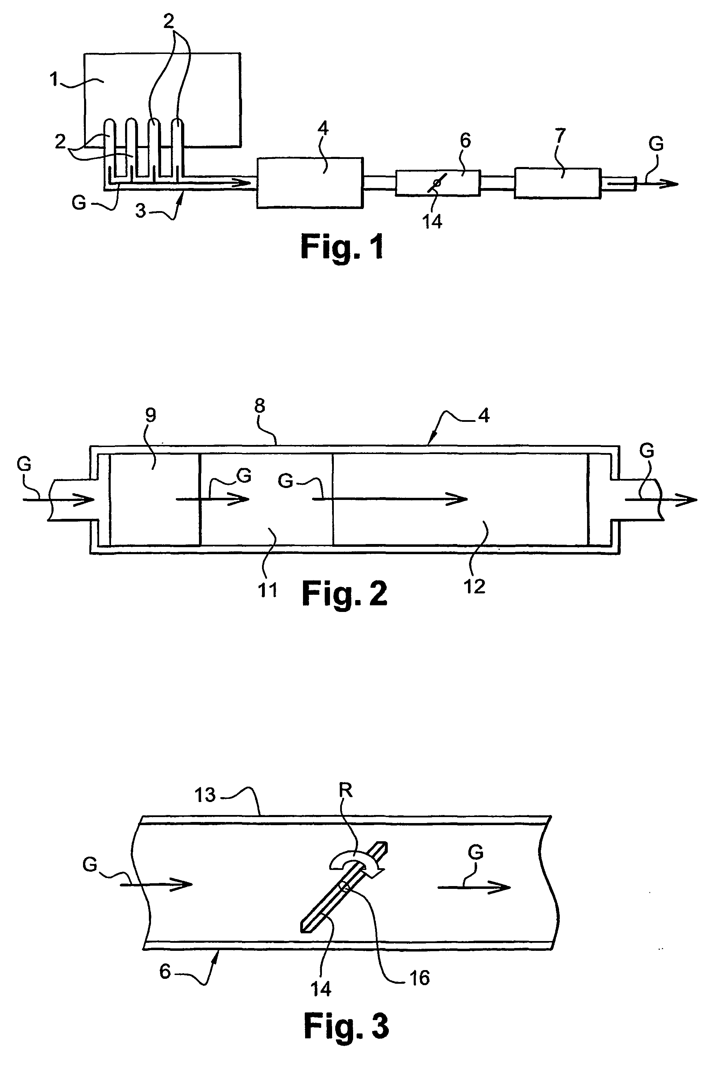

Une ligne d'échappement (3) selon une première forme de réalisation conformément à la présente invention (voir Figures 1 à 4) est chargée simultanément de la dépollution des gaz rejetés et de la réduction de l'intensité sonore. La ligne d'échappement (3) comprend, disposé en ligne et successivement sur le trajet suivi par les gaz d'échappement (Flèches G), un premier système de dépollution (4) chargé d'éliminer des particules solides, un système actif, c'est-à-dire une valve active ou tuyère active (6) chargée de réduire le bruit et un deuxième système de dépollution (7) chargé de réduire le taux de gaz oxydes d'azote NOₓ.

Le premier système de dépollution (4) est situé le plus en amont par rapport à la sortie des gaz d'échappement. Ce premier système de dépollution (4) joue le double rôle de filtre à particules, ainsi que de chambre de détente des gaz d'échappement lors de la régulation active du bruit par la tuyère active (6) placée plus en aval. Le filtre à particules permet une dépollution et une élimination des particules solides de suies, par exemple des résidus de constituants de carburants, d'huile de graissage, ...

Le premier système de dépollution (4) comprend (voir plus particulièrement la Figure 2) à l'intérieur d'une même enveloppe (8), disposés en ligne et successivement sur le trajet suivi par les gaz d'échappement (Flèches G), un catalyseur (9), la chambre de détente des gaz d'échappement (11) et un filtre à particules (12).

Ce premier système de dépollution (4) est et fonctionne suivant le principe du système CRT® « Continuously Regenerating Trap », tel que décrit dans le document EP- 0.341.832. On notera que ce premier système de dépollution (4) pourra être et fonctionner selon d'autres principes, dont un exemple est décrit dans le document WO- 00/ 34.632.

Le catalyseur (9) est chargé en platine et permet une oxydation des gaz oxydes d'azote NO en gaz NO₂. Les gaz d'échappement enrichis en NO₂ sont ensuite utilisés en entrée du filtre à particules (12) pour assurer une combustion à faible température du carbone des suies et une régénération en continu du filtre à particules (12) empêchant ainsi son colmatage.

A la sortie du premier système de dépollution (4), les gaz d'échappement passent ensuite dans la tuyère active (6) chargée de réduire le bruit. Cette tuyère active (6) est du type à restriction variable (voir plus particulièrement la Figure 3). Elle comprend un conduit cylindrique (13) chargé de canaliser la circulation des gaz d'échappement (Flèches G) et un volet (14) de forme sensiblement circulaire fixé et oscillant (Flèche R) par rapport à un axe (16) qui lui est solidaire du conduit cylindrique (13).

Le conduit cylindrique (13) est muni d'au moins un capteur (non représenté) de mesure d'une grandeur physique caractéristique du débit instantané des gaz. Le volet (14) joue le rôle de la restriction variable de la section du conduit (13) de passage des gaz et vient fermer le conduit cylindrique (13) en fonction de la grandeur mesurée par le ou les capteurs. Lorsque le volet (14) est en position partiellement fermée, le stockage instantané des gaz se réalise dans la chambre de détente des gaz d'échappement (11).

Le volet (14) oscille à la même fréquence que les pulsations de débit mais en opposition de phase, créant ainsi une deuxième source de pulsation de débit annulant la première, assurant ainsi une atténuation de la composante harmonique basses fréquences de l'écoulement. Cette tuyère active (6), son principe et son mode de fonctionnement sont décrits, par exemple, dans les documents FR- 2.613.089, WO- 94/ 01.659 et DE- 44.39.705.

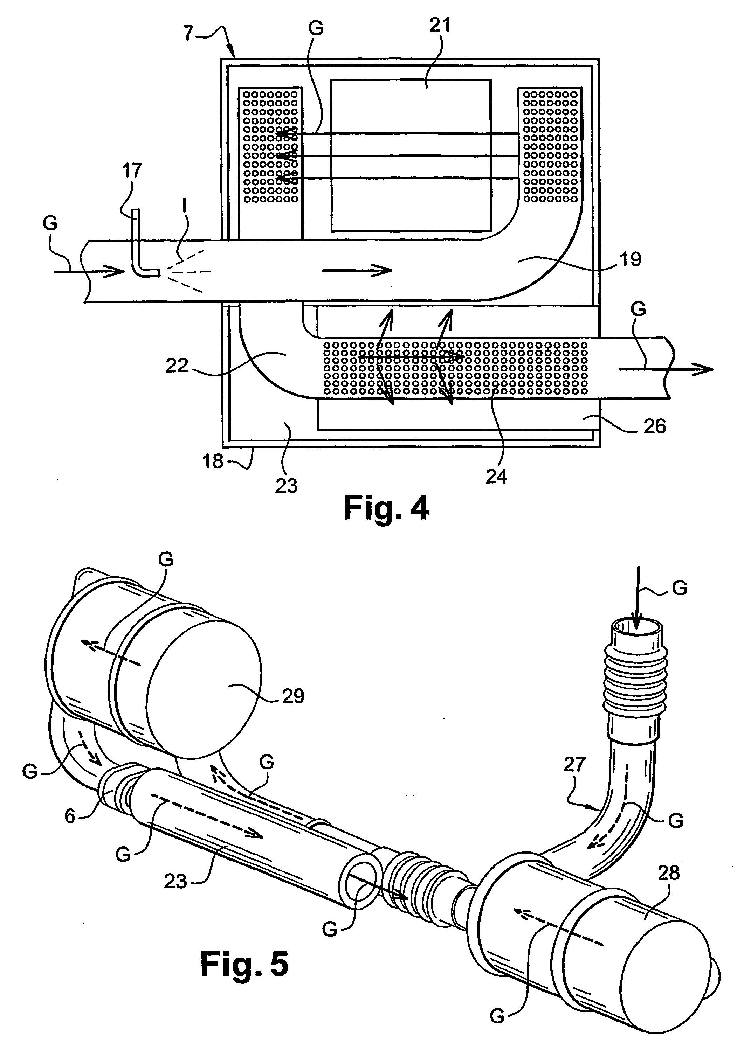

A la sortie de la tuyère active (6), les gaz d'échappement entrent ensuite dans le deuxième système (7) chargé notamment de réduire le taux de gaz oxydes d'azote NOₓ par catalyse. Le traitement anti-NOₓ, également connu sous le nom de « DéNOₓ », est et se fait par catalyse tel que décrit, par exemple, dans le document WO- 00/ 74.823. A cette dépollution est associée un traitement acoustique des composantes moyennes et hautes fréquences selon le principe du silencieux passif dissipatif, tel que décrit également dans le document WO- 94/ 01.659 (voir plus particulièrement la Figure 4).

Un injecteur (17) d'urée ou d'ammoniaque (I) est tout d'abord positionné en entrée du deuxième système (7) et permet de réduire les gaz oxydes d'azote NOₓ, principalement NO et NO₂ en N₂. Le deuxième système (7) comprend ensuite à l'intérieur d'une même enveloppe (18), disposés en ligne et successivement sur le trajet suivi par les gaz d'échappement (Flèches G), un conduit d'amené (19), un catalyseur à urée, dit « DéNOₓ » (21), un conduit intermédiaire (22), un silencieux passif ou silencieux dissipatif (23) présentant un canal à perforations multiples (24) débouchant sur un matériau poreux (26) présentant des propriétés acoustiques absorbantes des moyennes et hautes fréquences. On notera que le silencieux dissipatif (23) est placé complètement en fin de ligne d'échappement pour des raisons de meilleure efficacité. En effet, chacun des éléments le précédant, injecteur d'urée (17) et catalyseur DéNOₓ (21), est encore susceptible de générer des sons à moyennes et hautes fréquences devant être éliminés.

A la sortie de ce deuxième système (7) et ainsi à la sortie de la ligne d'échappement (3), l'écoulement des gaz est donc lissé et traité à la fois en terme de bruit et d'émissions polluantes.

Une comparaison des volumes a ensuite été effectuée. Pour un camion ayant un moteur de 12 litres de cylindrée développant 500 ch, le volume de chacun des éléments pris séparément est de :
- 55 1 pour le système d'élimination des particules (4) ;
- 20 1 pour la chambre de détente (11) pour les phases de fermeture du dispositif de restriction (14) ;
- 0 1 pour le système actif de réduction du bruit (6) ;
- 40 1 pour le réservoir d'urée ;
- 70 1 pour le catalyseur DéNOₓ (21) ; et
- 20 1 pour la cavité dissipative des moyennes et hautes fréquences (23) ;
soit un total de 205 litres, dont 165 litres hors réservoir d'urée.

Avec la présente invention, et pour ce même camion, le volume de la ligne d'échappement (3) sera de :
- 601 du système d'élimination des particules (4) intégrant la chambre de détente (11) pour les phases de fermeture du dispositif de restriction (14) ;
- 01 du système actif de réduction du bruit (6) ;
- 40 1 pour le réservoir d'urée ; et
- 75 1 pour le catalyseur DéNOₓ (21) intégrant la cavité dissipative des moyennes et hautes fréquences (23) ;
soit un total de 175 litres dont 135 litres hors réservoir d'urée.

Ce deuxième total doit être comparé avec le total précédent de 205 litres dont 165 litres hors réservoir d'urée, démontrant ainsi que la ligne d'échappement selon l'invention présente un gain non négligeable de volume et donc d'encombrement et de poids une fois montée.

La ligne d'échappement (27) selon une deuxième forme de réalisation préférée conformément à la présente invention (voir Figures 3 et 5) est chargée simultanément de la dépollution des gaz rejetés et de la réduction de l'intensité sonore. La ligne d'échappement (27) comprend, disposé en ligne et successivement sur le trajet suivi par les gaz d'échappement (Flèches G), un premier système de dépollution (28) chargé d'éliminer des particules solides, un deuxième système de dépollution (29) chargé de réduire le taux de gaz oxydes d'azote NOₓ, un système actif, c'est-à-dire une valve active ou tuyère active (6) chargée de réduire le bruit et un silencieux passif tubulaire.

Le premier système de dépollution (28) est situé le plus en amont par rapport à la sortie des gaz d'échappement. Ce premier système de dépollution (28) est un filtre à particules permet une dépollution et une élimination des particules solides de suies, par exemple des résidus de constituants de carburants, d'huile de graissage, ... Comme cela a déjà été décrit ci-dessus pour la première forme de réalisation, ce deuxième système de dépollution (28) est et fonctionne suivant le principe du système CRT® « Continuously Regenerating Trap », tel que décrit dans le document EP- 0.341.832. On notera que ce premier système de dépollution (28) pourra être et fonctionner selon d'autres principes, dont un exemple est décrit dans le document WO- 00/ 34.632.

A la sortie du premier système de dépollution (28), les gaz d'échappement passent ensuite dans le deuxième système (29) chargé notamment de réduire le taux de gaz oxydes d'azote NOₓ par catalyse. Comme cela a déjà été décrit ci-dessus pour la première forme de réalisation, le traitement anti-NOₓ, également connu sous le nom de « DéNOₓ », est et se fait par catalyse tel que décrit, par exemple, dans le document WO- 00/ 74.823.

Ce deuxième système de dépollution (29) joue le double rôle de réducteur des oxydes d'azote NOₓ, ainsi que de chambre de détente des gaz d'échappement lors de la régulation active du bruit par la tuyère active (6) placée plus en aval. Le deuxième système de dépollution (29) comprend de ce fait à l'intérieur d'une même enveloppe un catalyseur à urée, dit « DéNOₓ » et la chambre de détente des gaz d'échappement.

A la sortie du deuxième système de dépollution (29), les gaz d'échappement passent ensuite dans la tuyère active (6) chargée de réduire le bruit. Comme cela a déjà été décrit ci-dessus pour la première forme de réalisation, cette tuyère active (6), son principe et son mode de fonctionnement sont décrits, par exemple, dans les documents FR- 2.613.089, WO- 94/ 01.659 et DE- 44.39.705.

A la sortie de la tuyère active (6), les gaz d'échappement entrent enfin dans le silencieux dissipatif (23) à matériau poreux. Comme cela a déjà été décrit ci-dessus pour la première forme de réalisation, à la dépollution est associée un traitement acoustique des composantes moyennes et hautes fréquences selon le principe du silencieux passif dissipatif, tel que décrit également dans le document WO- 94/ 01.659. On notera que le silencieux dissipatif (23) est placé de manière isolée complètement en fin de ligne d'échappement (27) pour des raisons de meilleure efficacité.

A la sortie de ce silencieux dissipatif (23) et ainsi à la sortie de la ligne d'échappement (27), l'écoulement des gaz est donc lissé et traité à la fois en terme de bruit et d'émissions polluantes.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Ligne d'échappement, pour moteur à combustion interne (1), comprenant :
- un système actif de réduction du bruit (6), du type à dispositif de restriction variable (14), régulé en continu en fonction des pulsations du débit instantané des gaz d'échappement sortant du moteur à combustion interne (1), et
- un premier système de dépollution (4, 29), placé en amont dudit système actif de réduction du bruit (6)
**caractérisée en ce que** la ligne d'échappement présente
- une chambre de détente (11) pour les phases de fermeture du dispositif de restriction variable (14), placée en amont du système actif de réduction du bruit (6), et intégrée dans le premier système de dépollution (4, 29), et
- une cavité dissipative des moyennes et hautes fréquences (23) placée en aval dudit système actif de réduction du bruit (6).

2. Ligne d'échappement selon la revendication 1, **caractérisée en ce que** le premier système de dépollution placé en amont est un système d'élimination des particules solides (4).

3. Ligne d'échappement selon la revendication 2, **caractérisée en ce que** la chambre de détente (11) pour les phases de fermeture du dispositif de restriction variable (14) du système actif de réduction du bruit (6) est intégrée dans le système d'élimination des particules solides (4), entre un catalyseur (9) et un filtre à particules (12).

4. Ligne d'échappement selon l'une quelconque des revendications précédentes, **caractérisée en ce qu'**elle comprend en outre un deuxième système de dépollution (7) placé en aval du système actif de réduction du bruit (6).

5. Ligne d'échappement selon la revendication 4, **caractérisée en ce que** la cavité dissipative des moyennes et hautes fréquences (23) est intégrée dans le deuxième système de dépollution (7) placé en aval.

6. Ligne d'échappement selon la revendication 4 ou 5, **caractérisée en ce que** le deuxième système de dépollution (7) placé en aval est un système de réduction des gaz oxydes d'azote NOₓ (7).

7. Ligne d'échappement selon la revendication 5 ou 6, **caractérisée en ce que** la cavité dissipative des moyennes et hautes fréquences (23) est intégrée dans le deuxième système de dépollution (7), après un catalyseur DéNOₓ (21).

8. Ligne d'échappement selon la revendication 1, **caractérisée en ce que** le premier système de dépollution placé en amont est un système de réduction des gaz oxydes d'azote NOₓ (29).

9. Ligne d'échappement selon la revendication 8, **caractérisée en ce qu'**elle comprend en outre un deuxième système de dépollution (28) placé en amont du premier système de dépollution (29).

10. Ligne d'échappement selon la revendication 9, **caractérisée en ce que** le deuxième système de dépollution est un système d'élimination des particules solides (28).

11. Ligne d'échappement selon l'une quelconque des revendications 6 à 10, **caractérisée en ce que** le système de réduction des gaz oxydes d'azote NOₓ (7, 29) est du type à injection d'urée (17) suivi par un catalyseur DéNOₓ (21).

12. Moteur à combustion interne (1), **caractérisé en ce qu'**il est connecté à au moins une ligne d'échappement (3, 27) selon l'une des revendications précédentes.

13. Véhicule à moteur, **caractérisé en ce qu'**il comprend au moins une ligne d'échappement (3, 27) selon l'une des revendications 1 à 11.

## Patentansprüche

1. Auspuffleitung für einen Verbrennungsmotor (1), umfassend:
- ein aktives Schalldämpfungssystem (6) vom Typ mit verstellbarer Verengungsvorrichtung (14), die in Abhängigkeit von den Pulsationen des momentanen Durchsatzes der aus dem Verbrennungsmotor (1) austretenden Auspuffgase kontinuierlich geregelt ist, und
- ein erstes Abgasreinigungssystem (4, 29), das stromaufwärts von dem aktiven Schalldämpfungssystem (6) angeordnet ist,
**dadurch gekennzeichnet, dass** die Auspuffleitung aufweist:
- eine Expansionskammer (11) für die Schließphasen der verstellbaren Verengungsvorrichtung (14), die stromaufwärts vom aktiven Schalldämpfungssystem (6) angeordnet und in das erste Abgasreinigungssystem (4, 29) integriert ist, und
- einen Hohlraum zur Dissipation der mittleren und hohen Frequenzen (23), der stromabwärts vom aktiven Schalldämpfungssystem (6) angeordnet ist.

2. Auspuffleitung nach Anspruch 1, **dadurch gekennzeichnet, dass** das erste, stromaufwärts angeordnete Abgasreinigungssystem ein System zur Elimination der festen Partikel (4) ist.

3. Auspuffleitung nach Anspruch 2, **dadurch gekennzeichnet, dass** die Expansionskammer (11) für die Schließphasen der verstellbaren Verengungsvorrichtung (14) des aktiven Schalldämpfungssystems (6) in das System zur Elimination der festen Partikel (4) zwischen einem Katalysator (9) und einem Partikelfilter (12) integriert ist.

4. Auspuffleitung nach einem der vorhergehenden Ansprüche, **dadurch gekennzeichnet, dass** sie darüber hinaus ein zweites Abgasreinigungssystem (7) umfasst, das stromabwärts vom aktiven Schalldämpfungssystem (6) angeordnet ist.

5. Auspuffleitung nach Anspruch 4, **dadurch gekennzeichnet, dass** der Hohlraum zur Dissipation der mittleren und hohen Frequenzen (23) in das zweite, stromabwärts angeordnete Abgasreinigungssystem (7) integriert ist.

6. Auspuffleitung nach Anspruch 4 oder 5, **dadurch gekennzeichnet, dass** das zweite, stromabwärts angeordnete Abgasreinigungssystem (7) ein System zur Reduktion der Stickoxid-Gase NOx (7) ist.

7. Auspuffleitung nach Anspruch 5 oder 6, **dadurch gekennzeichnet, dass** der Hohlraum zur Dissipation der mittleren und hohen Frequenzen (23) in das zweite Abgasreinigungssystem (7) nach einem DeNOx-Katalysator (21) integriert ist.

8. Auspuffleitung nach Anspruch 1, **dadurch gekennzeichnet, dass** das erste, stromaufwärts angeordnete Abgasreinigungssystem ein System zur Reduktion der Stickoxid-Gase NOx (29) ist.

9. Auspuffleitung nach Anspruch 8, **dadurch gekennzeichnet, dass** sie darüber hinaus ein zweites Abgasreinigungssystem (28) umfasst, das stromaufwärts vom ersten Abgasreinigungssystem (29) angeordnet ist.

10. Auspuffleitung nach Anspruch 9, **dadurch gekennzeichnet, dass** das zweite Abgasreinigungssystem ein System zur Elimination der festen Partikel (28) ist.

11. Auspuffleitung nach einem der Ansprüche 6 bis 10, **dadurch gekennzeichnet, dass** das System zur Reduktion der Stickoxid-Gase (7, 29) vom Typ mit Harnstoffeinspritzung (17) ist, gefolgt von einem DeNOx-Katalysator (21).

12. Verbrennungsmotor (1), **dadurch gekennzeichnet, dass** er mit mindestens einer Auspuffleitung (3, 27) nach einem der vorhergehenden Ansprüche verbunden ist.

13. Motorfahrzeug, **dadurch gekennzeichnet, dass** es mindestens eine Auspuffleitung (3, 27) nach einem der Ansprüche 1 bis 11 umfasst.

## Claims

1. An exhaust line for internal combustion engine (1) comprising:
- an active noise reduction system (6) of the variable choke device type (14), regulated continuously as a function of the instantaneous discharge rate pulses of the exhaust gases from the internal combustion engine (1), and
- a first pollution control system (4, 29) placed upstream of said active noise reduction system (6),
**characterized in that** the exhaust line presents
- an expansion chamber (11) for the closing phases of the variable choke device (14), placed upstream of said active noise reduction system (6), and incorporated in the first pollution control system (4, 29), and
- a cavity dispersing the medium and high frequencies (23) placed downstream of said active noise reduction system (6).

2. The exhaust line as claimed in claim 1, **characterized in that** the first pollution control system placed upstream is a solid-particulate removal system (4).

3. The exhaust line as claimed in claim 2, **characterized in that** the expansion chamber (11) for the closing phases of the variable choke device (14) of the active noise reduction system (6) is incorporated in the solid-particulate removal system (4) between a catalyst (9) and a particulate filter (12).

4. The exhaust line as claimed in one of the preceding claims, **characterized in that** it further comprises a second pollution control system (7) placed downstream of the active noise reduction system (6).

5. The exhaust line as claimed in claim 4, **characterized in that** the cavity dispersing the medium and high frequencies (23) is incorporated in the second pollution control system (7) placed downstream.

6. The exhaust line as claimed in claim 4 or 5, **characterized in that** the second pollution control system (7) placed downstream is a NOₓ nitrogen oxide gas reduction system (7).

7. The exhaust line as claimed in claim 5 or 6, **characterized in that** the cavity dispersing the medium and high frequencies (23) is incorporated in the second pollution control system (7), after a DeNoₓ catalyst (21).

8. The exhaust line as claimed in claim 1, **characterized in that** the first pollution control system placed upstream is a NOₓ nitrogen oxide gas reduction system (29).

9. The exhaust line as claimed in claim 8, **characterized in that** it further comprises a second pollution control system (28) placed upstream of the first pollution control system (29).

10. The exhaust line as claimed in claim 9, **characterized in that** the second pollution control system is a solid-particulate removal system (28).

11. The exhaust line as claimed in any one of claims 6 to 10, **characterized in that** the NOₓ nitrogen oxide gas reduction system (7, 29) is of the urea injection type (17) followed by a DeNOₓ catalyst (21).

12. An internal combustion engine (1), **characterized in that** it is connected to at least one exhaust line (3, 27) as claimed in one of the preceding claims.

13. A motor vehicle, **characterized in that** it comprises at least one exhaust line (3, 27) as claimed in one of claims 1 to 11.
